Europäisches Patentamt

(19) European Patent Office

Office européen des brevets

(11) Numéro de publication : **0 146 662**
**B1**

(12) **FASCICULE DE BREVET EUROPÉEN**

(45) Date de publication du fascicule du brevet :
20.09.89

(51) Int. Cl.⁴ : **G 06 K   7/08**, G 11 B   5/58,
G 11 B 25/04

(21) Numéro de dépôt : **83440066.5**

(22) Date de dépôt : **21.12.83**

(54) **Lecteur de cartes à pistes magnétiques.**

(43) Date de publication de la demande :
03.07.85 Bulletin 85/27

(45) Mention de la délivrance du brevet :
20.09.89 Bulletin 89/38

(84) Etats contractants désignés :
AT BE CH DE GB IT LI LU NL SE

(56) Documents cités :
DE--B-- 1 096 090
DE--B-- 2 659 640
FR--A-- 1 254 130
PATENTS ABSTRACTS OF JAPAN, vol. 7, no. 82 (P-189)[1227], 6 avril 1983; & JP - A - 58 9261 (NIPPON DENSO K.K.) 19-01-1983
IBM TECHNICAL DISCLOSURE BULLETIN, vol. 13, no. 9, février 1971, page 2641, New York, US; H. REICH: "Multi-core magnetic contact head"

(73) Titulaire : **Diemert, Jean-Marc**
**26, route de Schwobsheim Baldenheim**
**F-67600 Selestat (FR)**

(72) Inventeur : **Diemert, Jean-Marc**
**26, route de Schwobsheim Baldenheim**
**F-67600 Selestat (FR)**

(74) Mandataire : **Nuss, Pierre**
**10, rue Jacques Kablé**
**F-67000 Strasbourg (FR)**

EP 0 146 662 B1

## Description

La présente invention concerne les dispositifs de lecture de cartes à pistes magnétiques, en particulier les lecteurs de pistes magnétiques, et a pour objet un support mobile pour tête de lecture de pistes magnétiques.

L'invention a également pour objet un lecteur de cartes à pistes magnétiques pourvu d'une telle tête de lecture.

Actuellement, les têtes de lecture adaptées à des cartes à pistes magnétiques sont généralement montées sur des supports métalliques non protégés assurant les degrés de liberté nécessaires au bon positionnement de la tête lorsque la carte est présentée à la lecture. Ces supports connus présentent un fonctionnement satisfaisant à l'abri des intempéries, des poussières, et autres nuisances. Cependant, en cas d'implantation de lecteurs équipés de telles têtes de lecture dans des endroits exposés à la pluie, aux poussières ou à une atmosphère polluante, la fiabilité nécessaire n'est plus assurée, une protection efficace des supports ne pouvant être réalisée du fait des jeux de fonctionnement devant exister autour de la tête afin de permettre son déplacement en vue d'un positionnement correct sur la piste à lire.

En effet, dans des lecteurs connus, la tête est montée dans un ensemble mécanique assurant les degrés de liberté nécessaires et comportant un pivot, une coulisse, et des ressorts, et est placée au centre d'une fenêtre située dans une des parois de la fente de passage de la carte magnétique. Ainsi, dans le cas d'une exposition aux intempéries, à la poussière, ou autres, la fenêtre de passage de la tête est également exposée, ainsi que l'ensemble mécanique de support et les circuits électroniques.

Dans d'autres lecteurs connus, la tête de lecture est montée sur une simple lame de ressort fixée à ses extrémités sur des paliers. Cependant, dans un tel mode de réalisation, la tête est toujours placée au centre d'une fenêtre de plus grandes dimensions, et les risques d'introduction de saletés ou d'humidité sont les mêmes que pour les lecteurs précités.

On connaît, par ailleurs, la réalisation objet du document FR-A-1 254 130. Ce document concerne un support combiné de tête magnétique d'enregistrement et de reproduction du son, et décrit plus particulièrement un lecteur de pistes magnétiques muni d'une tête de lecture entourée d'un capuchon bombé, fait d'une feuille de matière flexible présentant des ondulations circulaires. Mais ce dispositif ne permet qu'un déplacement linéaire. Par conséquent, le positionnement de la tête ne peut se faire que dans une direction précise.

On connaît, enfin, le document DE-B-2 659 640. Ce document enseigne l'emploi d'un ressort pour le maintien d'une carte contre une tête de lecture. Or, le mécanisme ne permet en aucun cas de maintenir un positionnement correct de la piste magnétique sur la tête de lecture. En outre, la tête de lecture est fixe. Un mauvais passage de la carte ne sera donc pas forcément rectifié, et une mauvaise lecture s'ensuivra, la tête étant fixe.

Ces dispositifs susvisés ne permettent donc ni de réaliser une étanchéité aux poussières et aux saletés, ni, et surtout, d'assurer un bon positionnement de la tête de lecture sur la piste magnétique. En particulier, lorsque c'est la carte magnétique qui se positionne sur la tête de lecture, il s'ensuit très souvent, les cartes étant déplacées manuellement, un mauvais contact tête-piste.

La présente invention a pour but de pallier ces inconvénients.

Elle a, en effet, pour objet un lecteur de cartes à pistes magnétiques, comportant une fente d'introduction de la carte magnétique, une fenêtre de passage d'une tête de lecture prévue dans une paroi de la fente et un support mobile pour la tête de lecture, caractérisé en ce que ledit support est constitué sous forme d'un élément élastique en matière synthétique, ou autre matière présentant une élasticité, de préférence en élastomère souple, enrobant partiellement la tête de lecture de manière que seulement la face de la tête de lecture qui est destinée à prendre contact avec la piste magnétique à lire n'est pas enrobée, ledit support étant fixé contre la paroi de la fente, de manière à fermer à étanchéité ladite fenêtre en assurant un déplacement et un bon positionnement de la tête sur la piste magnétique à lire.

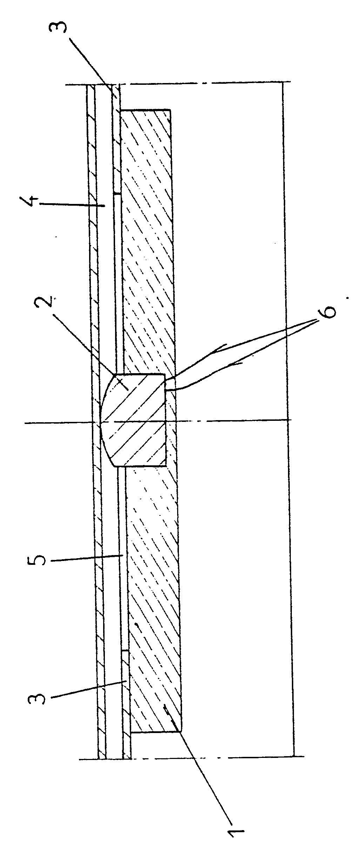

L'invention sera mieux comprise grâce à la description ci-après, qui se rapporte à un mode de réalisation préféré, donné à titre d'exemple non limitatif, et expliqué avec référence au dessin schématique annexé, dont la figure unique est une vue en élévation latérale et en coupe d'un support conforme à l'invention.

Le support mobile 1 pour tête de lecture 2 de pistes magnétiques selon l'invention est constitué sous forme d'un élément élastique en matière synthétique souple, ou autre matière présentant une élasticité, qui enrobe la tête de lecture 2 sur ses faces latérales et inférieure. Ce support 1 est fixé sur le corps du lecteur, contre une paroi 3 de la fente 4 d'introduction de la carte magnétique, de manière à fermer à étanchéité la fenêtre 5 de passage de la tête 2 prévue dans ladite paroi 3.

Le support 1 est avantageusement constitué par un élastomère souple et est fixé sur la paroi 3, par exemple par collage, les fils 6 de branchement de la tête 2 traversant la matière dudit support 1.

Grâce au mode de réalisation conforme à l'invention, la tête 2 peut être déplacée et positionnée correctement par le support 1 sur la carte magnétique à lire, l'étanchéité du boîtier du lecteur étant assurée par la fixation même du support 1. En outre, du fait du choix de la matière du support 1, un lecteur ainsi équipé devient insensible à toute pénétration d'humidité ou de poussières, de sorte qu'il peut être installé en un endroit exposé, et un risque de défaillance due au vieillissement est écarté du fait de l'absence de pièces mécaniques.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendication

Lecteur de cartes à pistes magnétiques, comportant une fente (4) d'introduction de la carte magnétique, une fenêtre (5) de passage d'une tête de lecture (2) prévue dans une paroi (3) de la fente (4) et un support mobile (1) pour la tête de lecture (2), caractérisé en ce que ledit support (1) est constitué sous forme d'un élément élastique en matière synthétique, ou autre matière présentant une élasticité, de préférence en élastomère souple, enrobant partiellement la tête de lecture (2) de manière que seulement la face de la tête de lecture (2) qui est destinée à prendre contact avec la piste magnétique à lire n'est pas enrobée, ledit support (1) étant fixé contre la paroi (3) de la fente (4), de manière à fermer à étanchéité ladite fenêtre (5) en assurant un déplacement et un bon positionnement de la tête (2) sur la piste magnétique à lire.

## Claim

Magnetic track card reader, comprising an introduction slot (4) of the magnetic card, a window (5) for the passage of a reading head (2) provided in a wall (3) of the slot (4) and a movable support (1) for the reading head (2), characterised in that the said support (1) is constituted in the form of an elastic element of synthetic material, preferably a flexible elastomer, partially coating the reading head (2) so that only the face of the reading head (2) which is intended to make contact with the magnetic track to be read is not coated, said support (1) being fixed against the wall (3) of the slot (4), so as to close imperviously the said window (5) assuring a displacement and a good positioning of the head (2) on the magnetic track to be read.

## Patentanspruch

Lesegerät für Magnetkarten, mit einem Schlitz (4) zur Einführung der Magnetkarte, einem in einer Wandung (3) des Schlitzes (4) vorgesehenen Fenster (5) zur Durchführung eines Lesekopfes (2), und einem beweglichen Träger (1) für den Lesekopf (2), dadurch gekennzeichnet, dass der Träger (1) als ein elastisches Element aus synthetischem oder anderem, eine Elastizität aufweisenden Material, vorzugsweise aus biegsamem Elastomer, ausgebildet ist, das teilweise den Lesekopf (2) so umhüllt, dass nur die Vorderseite des Lesekopfes (2), das dazu dient, mit der zu lesenden Magnetspur in Kontakt zu treten, nicht umhüllt ist, wobei der Träger (1) an der Wandung (3) des Schlitzes (4) befestigt ist, so dass das Fenster (5) dicht verschlossen wird, wodurch eine Verschiebung und gute Positionierung des Lesekopfes (2) auf der zu lesenden Magnetspur gewährleistet ist.

EP 0 146 662 B1